# EUROPEAN PATENT APPLICATION

(11) **EP 4 819 255 A1**
(43) Date of publication of application: **07.10.2026**
(21) Application number: 26159778.5
(22) Date of filing: 20.02.2026
(51) Int. Cl.: H01M 8/0276, H01M 8/0273, H01M 8/028, H01M 8/242

(54) **SPACER MEMBER AND FUEL CELL**

(30) Priority: 01.04.2025 JP 2025060252
(71) Applicant: Toyota Jidosha Kabushiki Kaisha, Toyota-shi, Aichi-ken 471-8571 (JP)
(72) Inventor: OGIWARA, Naoki, Toyota-shi, Aichi-ken, 471-8571 (JP); KURIHARA, Takuya, Toyota-shi, Aichi-ken, 471-8571 (JP); MIURA, Atsuhiro, Toyota-shi, Aichi-ken, 471-8571 (JP)
(74) Representative: TBK

(57) **Abstract**

A spacer member is provided that is arranged on a separator provided in a fuel cell. The spacer member is arranged outside a seal member arranged on the separator, the seal member surrounding a periphery of an opening part formed in the separator. The spacer member is interposed together with the seal member between fuel cells facing each other. The spacer member has a glass transition temperature equal to or greater than -20°C.

## Description

### BACKGROUND

### FIELD

The present disclosure relates to a spacer member and a fuel cell.

### RELATED ART

Patent Literature 1 discloses use of a seal member having a glass transition temperature equal to or less than -40°C in order to seal a constituting member of a fuel cell.

### PRIOR ART LITERATURES

Patent Literature 1: Japanese Patent Application Publication No. 2024-108382

In order to suppress warpage of a fuel cell, the inventors of the present application attempted to stack a plurality of fuel cells while providing a spacer member between the fuel cells. The inventors have found a problem that using a member having a glass transition point around -40°C as a spacer member makes the reaction force of the spacer member insufficient under a low temperature at which a separator of a fuel cell warps strongly, failing to suppress the warpage of the fuel cell.

### SUMMARY

The present disclosure is feasible in the following aspects.
(1) According to a first aspect of the present disclosure, a spacer member is provided that is arranged on a separator provided in a fuel cell. The spacer member is arranged outside a seal member arranged on the separator, the seal member surrounding a periphery of an opening part formed in the separator. The spacer member is interposed together with the seal member between fuel cells facing each other. The spacer member has a glass transition temperature equal to or greater than -20°C.

In this aspect, it is possible to reduce a probability of weakening of the reaction force of the spacer member under a low temperature below -20°C. This allows the warpage of the fuel cell to be suppressed under the low temperature.
(2) According to a second aspect of the present disclosure, a fuel cell is provided. The fuel cell comprises: the above spacer member; and the above separator provided with the opening part and on which the seal member is arranged in such a way as to surround the periphery of the opening part.
(3) In the fuel cell of the above aspect, the height of the seal member may be greater than the height of the spacer member. This aspect makes it possible to improve performance of sealing the opening part using the seal member.
(4) The fuel cell of the above aspect may comprise a membrane electrode assembly arranged at a position corresponding to a center region of the separator. In the separator, the opening part may be formed between the center region and an outer perimeter of the separator. The spacer member may be arranged between the opening part and the outer perimeter of the separator and may be absent between the opening part and the center region. This aspect makes it possible to suppress the warpage of the fuel cell favorably.
(5) The fuel cell of the above aspect may comprise a plurality of the spacer members. The separator may have a rectangular shape. The separator may be provided with a plurality of the opening parts. The plurality of opening parts and the plurality of spacer members may both be arranged at respective positions corresponding to four corners of the separator. This aspect makes it possible to reduce the occurrence of warpage at the entire fuel cell.
In addition to the aspects as the spacer member and the fuel cell described above, the present disclosure is also feasible in aspects including a fuel cell stack with a plurality of fuel cells and a method of manufacturing the fuel cell stack, for example.

### BRIEF DESCRIPTION OF THE DRAWINGS

Fig. 1 is a perspective view showing a schematic configuration of a fuel cell stack;
Fig. 2 is a front view showing a schematic configuration of a separator;
Fig. 3 is a schematic sectional view taken along a line III-III in Fig. 2;
Fig. 4 is an explanatory view showing a state where fuel cells are stacked;
Fig. 5 is a view showing a compression amount of a seal member; and
Fig. 6 is a view explaining a material of a spacer member.

### DETAILED DESCRIPTION

A. First Embodiment:

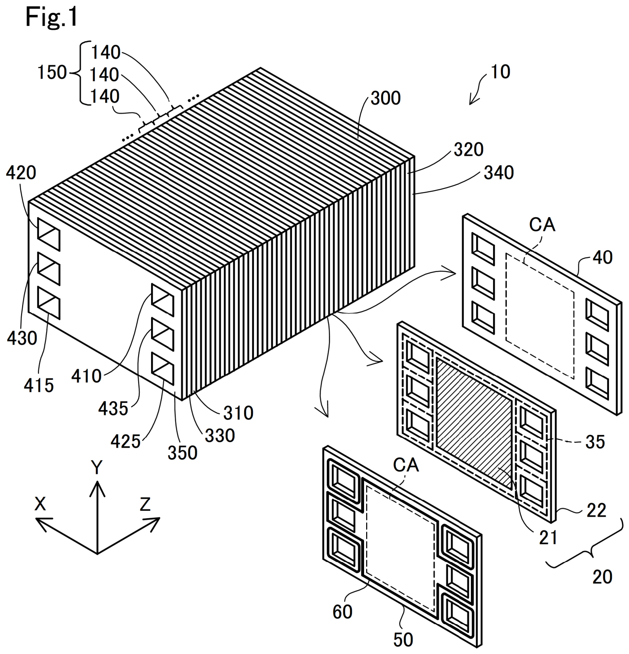

Fig. 1 is a perspective view showing a schematic configuration of a fuel cell stack 10 including a fuel cell 140 according to a first embodiment. Fig. 1 shows arrows along X, Y, and Z directions perpendicular to each other. The X, Y, and Z directions extend along an X axis, a Y axis, and a Z axis respectively that are three spatial axes perpendicular to each other, and each include both a direction on one side and its opposite direction along the X axis, the Y axis, and the Z axis respectively. The X axis and the Y axis are axes along a horizontal plane, and the Z axis is an axis along a vertical line. Arrows extending in the X, Y, and Z directions are further shown in other drawings, as appropriate. The X, Y, and Z directions in Fig. 1 and the X, Y, and Z directions in other drawings represent the same directions.

The fuel cell stack 10 includes a stack 150 formed by stacking a plurality of the fuel cells 140 in the Z direction, terminal plates 300 and 310 in a pair, insulating plates 320 and 330 in a pair, and end plates 340 and 350 in a pair. The terminal plates 300 and 310 interpose the stack 150 therebetween in the Z direction. The insulating plates 320 and 330 are arranged in contact with the terminal plates 300 and 310 respectively from outside in the Z direction. The end plates 340 and 350 are arranged in contact with the insulating plates 320 and 330 respectively from outside in the Z direction. The fuel cell stack 10 is fastened in the Z direction by a fastening member not shown in the drawings, and is retained under a fastening pressure applied in the Z direction. Stacking and fastening the plurality of fuel cells 140 may also be called formation into a stack. Each of the fuel cells 140 is also called a unit cell.

The fuel cell 140 of the present embodiment is a solid polymer fuel cell that generates electricity in response to supply of an anode gas containing hydrogen and a cathode gas containing oxygen. Electricity generated in the fuel cell stack 10 by electrochemical reaction is collected at the terminal plates 300 and 310, and is extracted to an external load from terminals provided at the terminal plates 300 and 310. The insulating plates 320 and 330 are composed of an insulating material such as rubber or resin. The end plates 340 and 350 are composed of metal such as stainless steel.

The fuel cell stack 10 is provided with an anode gas supply manifold 410 for supplying the anode gas to each fuel cell 140, and an anode off-gas discharge manifold 415 for discharging an anode off-gas from each fuel cell 140. The fuel cell stack 10 is further provided with a cathode gas supply manifold 420 for supplying the cathode gas to each fuel cell 140, and a cathode off-gas discharge manifold 425 for discharging a cathode off-gas from each fuel cell 140. Moreover, the fuel cell stack 10 is provided with a cooling medium supply manifold 430 for supplying a cooling medium to a cooling medium flow path between the fuel cells 140, and a cooling medium discharge manifold 435 for discharging the cooling medium from the cooling medium flow path.

The anode gas supply manifold 410 penetrates the end plate 350, the insulating plate 330, the terminal plate 310, and all the stacked fuel cells 140. Likewise, the anode off-gas discharge manifold 415, the cathode gas supply manifold 420, the cathode off-gas discharge manifold 425, the cooling medium supply manifold 430, and the cooling medium discharge manifold 435 each penetrate the end plate 350, the insulating plate 330, the terminal plate 310, and all the stacked fuel cells 140.

Each fuel cell 140 includes a membrane electrode gas-diffusion-layer assembly (MEGA) plate 20, and separators 40 and 50 in a pair. The MEGA plate 20 includes a MEGA 21 and a resin sheet 22 joined to a periphery of the MEGA 21. The separator 40 is located in the +Z direction with respect to the separator 50. The separators 40 and 50, and the MEGA plate 20 each have a rectangular shape. The separator 40 and the separator 50 have the same shape. The separator 40 may be called a first separator, and the separator 50 may be called a second separator.

The MEGA 21 includes a membrane electrode assembly (MEA), and gas diffusion layers in a pair interposing the MEA therebetween. The MEA includes an electrolyte membrane, and an anode electrode catalyst layer and a cathode electrode catalyst layer arranged on corresponding surfaces of the electrolyte membrane opposite to each other. The electrolyte membrane is a solid polymer membrane having favorable proton conductivity in a wet state. The electrolyte membrane is composed of an ion exchange membrane made of fluorine resin, for example. The catalyst layers include catalysts for facilitating chemical reaction between hydrogen and oxygen, and carbon particles on which the catalysts are supported. The gas diffusion layers are provided adjacent to surfaces on the sides of the corresponding catalyst layers. The gas diffusion layers are layers for causing the reaction gases used for the electrode reaction to diffuse in a plane direction of the electrolyte membrane, and are composed of porous base materials for diffusion layers. As the base materials for diffusion layers, porous base materials having electrical conductivity and gas diffusion properties are used that are carbon fiber base materials, graphitic fiber base materials, or foamed metal, for example. The MEA is located at a position corresponding to a center region CA of each of the separators 40 and 50.

In the present embodiment, the resin sheet 22 is composed of polyethylene terephthalate (PET). In other embodiments, the resin sheet 22 may be composed of members of various types of other thermoplastic resins such as polypropylene and polyethylene. The resin sheet 22 includes a slit-like gas inlet channel (not shown in the drawings) provided in such a way as to communicably connect each manifold and the MEGA 21 to each other. More specifically, the manifold communicably connected to the MEGA 21 via the gas inlet channel includes the anode gas supply manifold 410, the anode off-gas discharge manifold 415, the cathode gas supply manifold 420, and the cathode off-gas discharge manifold 425.

In Fig. 1, the position of a seal part 35 at the resin sheet 22 is indicated by dashed lines. The seal part 35 means a part of the resin sheet 22 adhesively attached to the separators 40 and 50. When viewed in the Z direction, the seal part 35 is formed in such a way as to surround each manifold individually, and is used for sealing a fluid in the fuel cell 140. While the separator 50, the MEGA plate 20, and the separator 40 are stacked in this order from below, for example, the seal part 35 is formed by hot-pressing the resin sheet 22 from above the separator 40.

The separators 40 and 50 interpose the MEGA plate 20 therebetween. In the present embodiment, the separators 40 and 50 have electrical conductivity and are composed of titanium with high resistance to corrosion. The separators 40 and 50 may be composed of SUS.

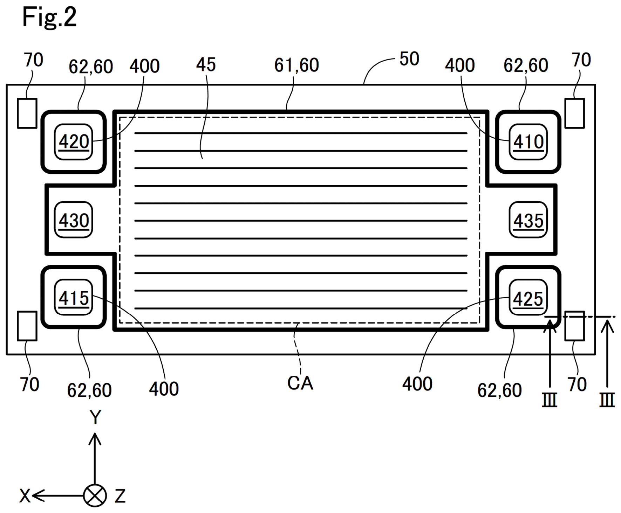

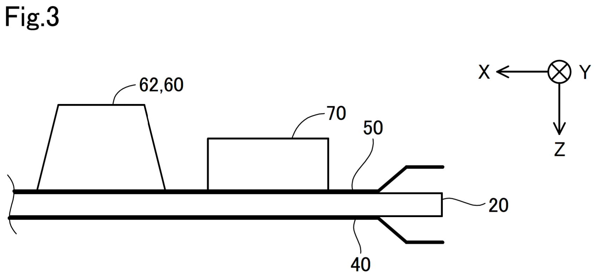

Fig. 2 is a front view showing a schematic configuration of the separator 50. Fig. 3 is a schematic sectional view taken along a line III-III in Fig. 2. A seal member 60 is arranged on a surface of the separator 50 of the fuel cell 140. The surface of the separator 50 means an external surface of the separator 50, which is a surface opposite to a surface in contact with the MEGA plate 20. The seal member 60 is composed of rubber, thermoplastic elastomer, or a UV-curable gasket, for example. During the fastening of the fuel cell stack 10 described above, the seal member 60 deforms in response to receipt of force acting in a direction in which the seal member 60 is interposed in the Z direction. This deformation increases an area of contact between the seal member 60 and each of the separators 40 and 50 interposing the seal member 60 therebetween, thereby ensuring performance of sealing a fluid between the fuel cells 140 next to each other.

The seal member 60 of the present embodiment includes a first seal member 61 and a plurality of second seal members 62. The first seal member 61 surrounds the cooling medium supply manifold 430, the cooling medium discharge manifold 435, and a cooling medium flow path 45 defined between the fuel cells 140 next to each other. The second seal members 62 are provided individually in peripheries of the anode gas supply manifold 410, the anode off-gas discharge manifold 415, the cathode gas supply manifold 420, and the cathode off-gas discharge manifold 425 individually. The seal member 60 is adhesively attached to the surface of the separator 50. The seal member 60 is also called a gasket. In other embodiments, the first seal member 61 and the second seal members 62 may be formed integrally.

If distinction is not made between the names of an opening part forming the anode gas supply manifold 410, an opening part forming the anode off-gas discharge manifold 415, an opening part forming the cathode gas supply manifold 420, and an opening part forming the cathode off-gas discharge manifold 425 at the separator 50, these opening parts are simply called opening parts 400. The opening parts 400 are arranged at positions corresponding to four corners of the rectangular separator 50. The opening parts 400 are located between the center region CA and an outer perimeter of the separator 50.

A spacer member 70 is arranged on the separator 50. The spacer member 70 is also called a warpage reducer. The spacer member 70 is arranged outside the seal member 60 provided in the periphery of the opening part 400 formed in the separator 50. In the present embodiment, the spacer member 70 is arranged external to the second seal member 62 provided in the periphery of the opening part 400. Specifically, on the separator 50, the opening part 400 is located inside the second seal member 62 and the spacer member 70 is located external to the second seal member 62. The spacer member 70 has a substantially rectangular solid shape. The spacer member 70 is composed of rubber, thermoplastic elastomer, or a UV-curable gasket, for example. Like the seal member 60, the spacer member 70 is adhesively attached to the surface of the separator 50. As shown in Fig. 3, while the fuel cells 140 are not stacked, the height of the seal member 60 from the surface of the separator 50 is greater than the corresponding height of the spacer member 70. In other words, the height of the spacer member 70 is less than the height of the seal member 60. The spacer member 70 is interposed together with the seal member 60 between the fuel cells 140 facing each other.

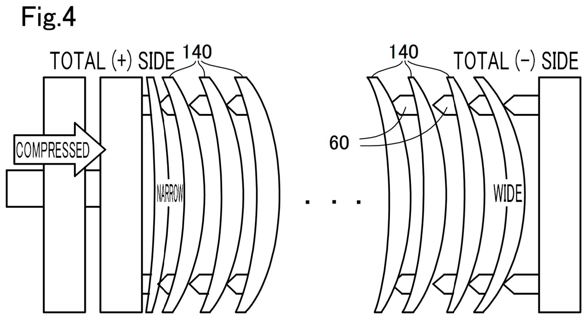

Fig. 4 is an explanatory view showing a state where the fuel cells 140 are stacked. In a manufacturing step of manufacturing the fuel cell 140, by interposing the MEGA plate 20 using the separator 40 and the separator 50 and joining them by hot-pressing, the fuel cell 140 may warp in such a way as to project toward an anode side. In other words, the warpage may be caused in the fuel cell 140 in such a way that end portions of the fuel cell 140 warp toward a cathode side. This is caused by the influence of springback occurring during press forming of the separators 40 and 50. Fig. 4 shows a state with a stack of the fuel cells 140 each warping in such a way as to project toward the anode side. By stacking the fuel cells 140 each warping in such a way as to project toward the anode side, a gap between the fuel cells 140 becomes larger as the fuel cells 140 are arranged closer to a total negative electrode side. This results in insufficiency in a compression amount of the seal member 60 to cause a risk of gas leak between the fuel cells 140.

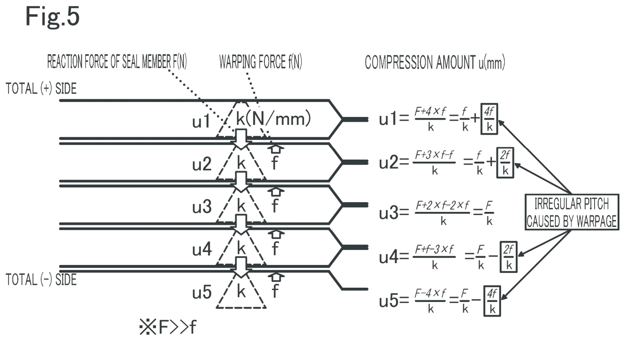

Fig. 5 is a view explaining a compression amount of the seal member 60 provided in the fuel cell 140 without the spacer member 70. As shown in Fig. 5, with a warping force of the fuel cell 140 defined as f (N) and a spring constant of the seal member 60 defined as k (N/mm), a compression amount u (mm) of the seal member 60 on the total negative electrode side is reduced by an irregular pitch nf/k (mm) (n is the number of the stacked fuel cells 140). Reduction in a compression amount of the seal member 60 increases a clearance between the fuel cells 140. The warping force means force of the fuel cell 140 trying to restore its original when the fuel cell 140 with warpage is being flattened, namely, force trying to warp. The warping force becomes measurable using a push-pull gauge after the fuel cell 140 is pushed until it is flattened.

In the present embodiment, the spacer members 70 are arranged at positions corresponding to the four corners of the separator 50 in response to the respective opening parts 400 formed at positions corresponding to the four corners of the separator 50. Thus, among the fuel cells 140, the respective four corners of each fuel cell 140 come into contact with the spacer members 70. As a result, even on the occurrence of warpage of the fuel cell 140, the warpage is corrected during stacking, making it possible to reduce the occurrence of wide and narrow pitches between the fuel cells 140. During stacking of the fuel cells 140, a compression pressure is adjusted to such an extent that not only the seal member 60 but also the spacer member 70 is compressed. By locating the seal member 60 and the spacer member 70 between the fuel cells 140, the spring constant k shown in Fig. 5 is determined as a total value of a spring constant k1 of the seal member 60 and a spring constant k2 of the spacer member 70 (k = k1 + k2). As a result, even with the same warping force of the fuel cells 140, increasing the spring constant reduces the irregular pitch (nf/k) shown in Fig. 5, making it unlikely that a clearance between the fuel cells 140 will be increased. The area of the spacer member 70 is determined by calculating rigidity required for the spacer member 70 and calculating an area with which it is possible to ensure the calculated rigidity.

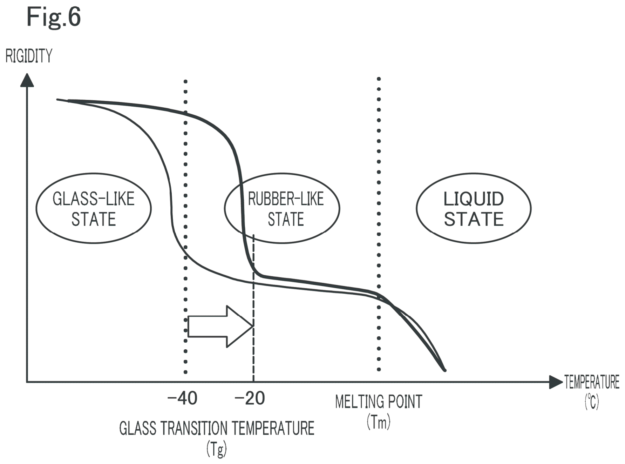

Fig. 6 is a view explaining a material of the spacer member 70. The spacer member 70 of the present embodiment is formed using a material having a glass transition temperature equal to or greater than -20°C. As such a material, a cured in place gasket (CIPG) as a UV-curable gasket is applicable. An operation guaranteed temperature of the fuel cell 140 in the present embodiment is from about -30°C to about 100°C. The operation guaranteed temperature is a temperature range in an external environment in which normal operation of the fuel cell 140 is guaranteed. The glass transition temperature of the spacer member 70 of the present embodiment is higher than a minimum operation guaranteed temperature of the fuel cell 140. Preferably, the glass transition temperature of the spacer member 70 is higher than the minimum operation guaranteed temperature of the fuel cell 140 by 5°C or more. In the present embodiment, the glass transition temperature of the spacer member 70 is -20°C, which is higher by 10°C than the minimum operation guaranteed temperature of the fuel cell 140. Preferably, the glass transition temperature of the spacer member 70 is lower than 0°C, more preferably, lower than -10°C.

It is known that the separators 40 and 50 composed of titanium or SUS increase further in Young's modulus to become more rigid at a lower temperature. This makes the warping force of the fuel cell 140 larger at a lower temperature. As a result, the above irregular pitch becomes larger at a lower temperature. In response to this, in the present embodiment, by setting the glass transition temperature of the spacer member 70 to -20°C which is higher than the minimum operation guaranteed temperature of the fuel cell 140, the spacer member 70 becomes rigid under a low temperature around the minimum operation guaranteed temperature. As a result, the spacer member 70 becomes more rigid under a low temperature to increase reaction force. This makes it possible to reduce a probability of expansion of a gap between the fuel cells 140.

In the present embodiment described above, the spacer member 70 having a glass transition temperature equal to or greater than -20°C is interposed together with the seal member 60 between the fuel cells 140 next to each other. Thus, the reaction force of the spacer member 70 is increased under a low temperature at which the warping force of the fuel cell 140 is large, thereby suppressing the warpage of the fuel cell 140. As a result, it becomes possible to reduce the occurrence of gas leak from between the fuel cells 140 due to the warpage of the fuel cell 140 under the low temperature.

In the present embodiment, as the height of the seal member 60 is greater than the height of the spacer member 70 on the separator 50, it is possible to increase a compression amount of the seal member 60. This achieves improvement in performance of gas seal by the seal member 60.

In the present embodiment, the spacer member 70 is arranged between the opening part 400 of the separator 50 and the outer perimeter of the separator 50, and is absent between the opening part 400 and the center region CA of the separator 50. This makes it possible to effectively reduce the occurrence of warpage at an end portion of the fuel cell 140.

In the present embodiment, the plurality of opening parts 400 and the plurality of spacer members 70 are both arranged at respective positions corresponding to the four corners of the rectangular separator 50. This makes it possible to reduce the occurrence of warpage at the entire fuel cell 140.

B. Other Embodiments:
(B1) In the above embodiment, the height of the seal member 60 arranged on the separator 50 is greater than the height of the spacer member 70. Alternatively, the height of the seal member 60 may be equal to or less than the height of the spacer member 70.

(B2) In the above embodiment, the spacer member 70 is absent between the opening part 400 and the center region CA of the separator 50. Alternatively, the spacer member 70 may be arranged between the opening part 400 and the center region CA of the separator 50.

(B3) In the above embodiment, the spacer members 70 are arranged at positions corresponding to the four corners of the separator 50. Alternatively, the spacer members 70 may be arranged at positions other than the four corners of the separator 50.

(B4) In the above embodiment, the seal member 60 and the spacer member 70 are adhesively attached to the separator 50. Alternatively, the seal member 60 and the spacer member 70 may be adhesively attached to the separator 40. Still alternatively, one of the seal member 60 and the spacer member 70 may be adhesively attached to the separator 50, and the other may be adhesively attached to the separator 40.

(B5) In the example explained in the above embodiment, the fuel cell 140 warps in such a way as to project toward the total negative electrode side. By the influence of springback occurring during press forming of the separators 40 and 50, however, the fuel cell 140 might warp in such a way as to project toward a total positive electrode side. Even in this case, arranging the spacer member 70 in the way described in the above embodiment still makes it possible to suppress the warpage of the fuel cell 140.

(B6) In the above embodiment, the spacer member 70 has a substantially rectangular solid shape. The shape of the spacer member 70 is not limited to this but may be a substantially circular columnar shape or an L-shape in a top view, for example.

(B7) The present disclosure is not limited to solid polymer electrolyte fuel cells but is widely applicable to fuel cells of a type where a fuel cell stack is formed by stacking a plurality of fuel cells.

The present disclosure is not limited to the embodiments described above and is able to be realized with various configurations without departing from the spirit thereof. For example, technical features in the embodiments corresponding to the technical features in the aspects described in the section of SUMMARY are able to be replaced with each other or combined together, as appropriate, in order to solve part or the whole of the problems described previously or to achieve part or the whole of the effects described previously. When the technical features are not described as essential features in the present specification, they are able to be deleted, as appropriate.

## Claims

1. A spacer member (70) arranged on a separator (40) provided in a fuel cell (140), wherein
the spacer member is arranged outside a seal member (60) arranged on the separator, the seal member surrounding a periphery of an opening part (400) formed in the separator,
the spacer member is interposed together with the seal member between fuel cells facing each other, and
the spacer member has a glass transition temperature equal to or greater than - 20°C.

2. A fuel cell (140) comprising:
the spacer member according to claim 1; and
the separator provided with the opening part and on which the seal member is arranged in such a way as to surround the periphery of the opening part.

3. The fuel cell according to claim 2, wherein
the height of the seal member is greater than the height of the spacer member.

4. The fuel cell according to claim 2, comprising:
a membrane electrode assembly arranged at a position corresponding to a center region of the separator, wherein
in the separator, the opening part is formed between the center region and an outer perimeter of the separator, and
the spacer member is arranged between the opening part and the outer perimeter of the separator and is absent between the opening part and the center region.

5. The fuel cell according to claim 4, comprising:
a plurality of the spacer members, wherein
the separator has a rectangular shape,
the separator is provided with a plurality of the opening parts, and
the plurality of opening parts and the plurality of spacer members are both arranged at respective positions corresponding to four corners of the separator.
